# EUROPÄISCHE PATENTANMELDUNG

(11) **EP 2 674 354 A2**
(43) Veröffentlichungstag der Anmeldung: **18.12.2013**
(21) Anmeldenummer: 13167398.0
(22) Anmeldetag: 13.05.2013
(51) Int. Cl.: B62M 25/06

(54) **Schalteinrichtung sowie Verfahren zum Schalten eines Getriebes**

(30) Priorität: 11.06.2012 DE 102012209720
(71) Anmelder: Bayerische Motoren Werke Aktiengesellschaft, 80809 München (DE)
(72) Erfinder: Röhrig, Berndt, 82223 Eichenau (DE)

(57) **Zusammenfassung**

Schalteinrichtung, insbesondere für Motorräder, mit einem Schalthebel, insbesondere einem per Fuß betätigbaren Fußschalthebel, einer Schaltassistenzeinrichtung, die ein mit dem Schalthebel gekoppeltes Eingangselement, ein mit einem Schalteingang eines Getriebes gekoppeltes Ausgangselement und eine Federeinrichtung aufweist, welche eine Kraft- oder Drehmomentübertragung von dem Eingangselement auf das Ausgangselement, und umgekehrt, ermöglicht. Das Eingangselement ist um eine erste Schwenkachse und das Ausgangselement um eine zweite Schwenkachse schwenkbar.

## Beschreibung

Die vorliegende Erfindung betrifft eine Schalteinrichtung gemäß dem Oberbegriff des Patentanspruches 1 sowie ein Verfahren zum Schalten eines Getriebes gemäß den Merkmalen des Patentanspruches 17.

Eine Schalteinrichtung gemäß dem Oberbegriff des Patentanspruches ist aus der DE 10 2010 015 037 bekannt.

Schalteinrichtungen für Motorräder weisen üblicherweise einen Fußschalthebel auf, der unmittelbar auf einer Schaltwelle eines Getriebes angeordnet ist oder über einen "Hebel-Gelenkmechanismus" mit einem "Schalteingang" des Getriebes verbunden ist. Durch sequentielles nach oben Ziehen des Schalthebels kann von einem aktuellen Gang in den nächsthöheren Gang geschaltet werden. Durch nach unten Drücken des Schalthebels kann sequentiell in niedrigere Gänge geschaltet werden.

Bei sehr sportlichen Motorrädern möchte man sehr schnell schalten und zwar möglichst ohne dass die Kupplung betätigt werden muss. Mit dem BMW Motorrad HP2 Sport wurde ein sogenannter "Schaltassistent" vorgestellt. Bei dem Schaltassistenten handelt es sich um eine Schaltkraftübertragungseinrichtung, die zwischen dem Fußschalthebel und dem Schalteingang des Getriebes angeordnet ist. Die Schaltkraftübertragungseinrichtung sensiert die vom Fuß des Fahrers ausgeübte Schaltkraft. Bei Überschreiten eines vorgegebenen Schwellwerts wird über einen Elektronikeingriff kurzzeitig das Drehmoment des Antriebsmotors herabgesetzt, was ein Hochschalten von einem Gang in einen nächsthöheren Gang ohne Betätigung der Kupplung ermöglicht.

Die in der oben bereits erwähnten DE 10 2010 015 037 A1 beschriebene Schalteinrichtung weist einen Schaltassistenten auf, der im Unterschied zu dem von der BMW HP2 Sport bekannten Schaltassistenten in beiden Schaltrichtungen (d. h. sowohl beim Hochschalten als auch beim Herunterschalten) ein Schalten bei geschlossener Kupplung ermöglicht.

Aufgabe der Erfindung ist es eine Schalteinrichtung mit einem Schaltassistenten zu schaffen, der konstruktiv sehr einfach, kostengünstig und kompakt aufgebaut ist, sowie ein entsprechendes Verfahren zum Schalten eines Getriebes anzugeben.

Diese Aufgabe wird durch die Merkmale der Patentansprüche 1 bzw. 17 gelöst. Vorteilhafte Ausgestaltungen und Weiterbildungen der Erfindung sind den Unteransprüchen zu entnehmen.

Ausgangspunkt der Erfindung ist eine Schalteinrichtung, insbesondere für Motorräder, mit einem Schalthebel. Bei dem Schalthebel kann es sich insbesondere um einen schwenkbar seitlich am Motorrad bzw. seitlich neben dem Getriebe angeordneten, per Fuß betätigbaren Fußschalthebel handeln. Durch Betätigen des Fußschalthebels kann ein Getriebe sequentiell von einem Gang in einen nächsthöheren bzw. in einen nächstniedrigeren Gang geschaltet werden. Der Schalthebel ist hierzu mittelbar über eine sogenannte Schaltassistenzeinrichtung mit einem Schalteingang des Getriebes gekoppelt. Die Schaltassistenzeinrichtung weist ein mit dem Schalthebel gekoppeltes "Eingangselement" auf und ein mit dem Schalteingang des Getriebes gekoppeltes Ausgangselement. Bei dem Schalteingang des Getriebes kann es sich beispielsweise um eine aus dem Getriebegehäuse seitlich herausstehende, schwenkbare Schaltwelle handeln, Die Schaltassistenzeinrichtung weist ferner eine Federeinrichtung auf, welche eine Kraft- bzw. Drehmomentübertragung von dem Eingangselement auf das Ausgangselement, und umgekehrt, ermöglicht. Zum Schalten des Getriebes betätigt der Fahrer den Schalthebel. Eine auf den Schalthebel ausgeübte Schaltkraft bzw. ein auf den Schalthebel ausgeübtes Schaltmoment wird über die Schaltassistenzeinrichtung auf den Schalteingang bzw. die Schaltwelle des Getriebes übertragen.

Der Kern der Erfindung besteht darin, dass es sich sowohl bei dem Eingangselement als auch bei dem Ausgangselement der Schaltassistenzeinrichtung um Schwenkelemente handelt. Das Eingangselement ist um eine erste Schwenkachse schwenkbar angeordnet. Das Ausgangselement der Schaltassistenzeinrichtung ist um eine zweite Schwenkachse schwenkbar angeordnet. Vorzugweise ist die erste Schwenkachse koaxial zur und/oder identisch mit der zweiten Schwenkachse, was eine sehr kompakte Bauweise ermöglicht.

Das Eingangselement der Schaltassistenzeinrichtung ist relativ zu dem Ausgangselement verschwenkbar und umgekehrt. Durch Betätigen des Schalthebels kann das Eingangselement relativ zu dem Ausgangselement verschwenkt werden. Mittels einer Sensoreinrichtung kann detektiert werden, wie weit das Eingangselement relativ zu dem Ausgangselement verschwenkt worden ist. Bei Überschreiten einer vorgegebenen Relativauslenkung des Eingangselements in Bezug auf das Ausgangselement erzeugt die Sensoreinrichtung ein Signal. Das Signal kann als "Schaltwunschsignal" interpretiert werden, da der Schalthebel und das damit gekoppelte Eingangselement üblicherweise nur dann signifikant betätigt wird, wenn der Fahrer tatsächlich schalten möchte. Zum Sensieren der Relativauslenkung des Eingangselements in Bezug auf das Ausgangselement kann ein z. B. ein Hallsensor verwendet werden.

Nach einer Weiterbildung der Erfindung ist eine Elektronik vorgesehen, welche bei Vorliegen eines Schaltwunschsignals ein von einem Antriebsmotor des Fahrzeugs bzw. Motorrads erzeugtes Drehmoment so verändert, dass das von dem Getriebe übertragene Drehmoment unter einen vorgegebenen Wert absinkt. Wenn das Getriebe bzw. der Antriebsstrang nahezu oder weitgehend lastfrei ist, kann mit geringem Schaltkraftaufwand vom momentanen Getriebegang in einen nächsthöheren oder nächstniedrigeren Gang geschaltet werden.

Nach einer Weiterbildung der Erfindung können zumindest in manchen Betriebszuständen das Eingangselement und das Ausgangselement gemeinsam und gleichsinnig in Bezug auf das Gehäuse des Getriebes verschwenkt werden und zwar ohne dass sie relativ zueinander verschwenkt werden.

Das "Eingangselement" der Schaltassistenzeinrichtung kann beispielsweise durch ein Gehäuse der Schaltassistenzeinrichtung gebildet sein und das Ausgangselement durch ein in dem Gehäuse angeordnetes Schwenkelement, insbesondere durch einen in dem Gehäuse angeordneten Schwenkarm. Prinzipiell ist auch eine kinematische Umkehr denkbar. Mit anderen Worten kann das Ausgangselement durch ein Gehäuse der Schaltassistenzeinrichtung und das Eingangselement durch ein in dem Gehäuse angeordnetes Schwenkelement, insbesondere durch einen Schwenkarm, gebildet sein.

Wenn der Schalthebel unbetätigt ist, befinden sich das Eingangselement und das Ausgangselement in einer definierten, vorgegebenen Relativgrundstellung. Die Stellung des Eingangselements und des Ausgangselements in ihrer "Relativgrundstellung" ist bei unbetätigtem Schalthebel durch die Federeinrichtung festgelegt. In der Relativgrundstellung ist die in der Federeinrichtung gespeicherte Federenergie minimal. Wir nun bei einer Betätigung des Schalthebels das Eingangselement in Bezug auf das Ausgangselement verschwenkt, so wird die Federeinrichtung (weiter) gespannt, wodurch sich die in der Federeinrichtung gespeicherte Energie vergrößert. Es kann vorgesehen sein, dass die Federeinrichtung teilweise oder völlig entspannt wird, wenn nach einer Betätigung des Schalthebels und des damit gekoppelten Eingangselements das Getriebe tatsächlich geschaltet wird. Beim Schalten des Getriebes kommt es zu einem Verschwenken des Ausgangselements in Bezug auf das Eingangselement.

Es kann vorgesehen sein, dass die Federeinrichtung der Schaltassistenzeinrichtung genau eine einzige Feder aufweist. Bei der Feder kann es sich z. B. um eine Biegefeder handeln. Als Biegefeder in Betracht kommt z. B. eine Blattfeder oder eine Schraubenfeder. Es kann vorgesehen sein, dass eine Schraubenfeder eine oder mehrere Federwindungen aufweist, wobei, in Richtung der Schraubachse der Schraubenfeder betrachtet, die freien Enden der Schraubenfeder einander kreuzend angeordnet sein können.

Die Schaltassistenzeinrichtung, d. h. die das Eingangselement, das Ausgangselement, die Federeinrichtung und die Sensoreinrichtung umfassende Anordnung kann seitlich außen an einem Getriebegehäuse oder seitlich neben dem Getriebegehäuse in einem gewissen Abstand zum Getriebegehäuse angeordnet sein.

Im Folgenden wird die Erfindung im Zusammenhang mit der Zeichnung näher erläutert. Es zeigen:
- Figur 1: ein Schema eines ersten Ausführungsbeispiels gemäß der Erfindung;
- Figur 2: ein Schema eines zweiten Ausführungsbeispiels gemäß der Erfindung; und
- Figur 3-4: verschiedene Ansichten einer Schaltassistenzeinrichtung entsprechend dem in Figur 1 gezeigten Grundprinzip.

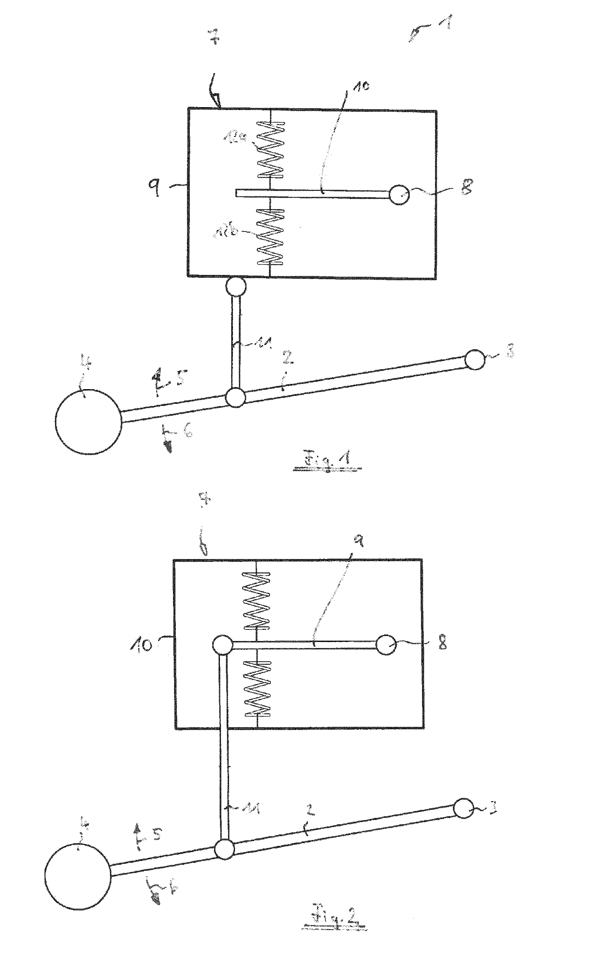

Figur 1 zeigt ein Schema einer Schalteinrichtung 1 für Motorräder. Die Schalteinrichtung 1 weist einen Fußschalthebel 2 auf, der um eine Schwenkachse 3, die quer zu einer Motorradlängsrichtung ist, verschwenkt werden kann. Zum Betätigen des Fußschalthebels 2 ist an dessen freiem Ende ein quer abstehendes Element 4 vorgesehen, das vom Fahrer mit dem Fuß nach oben oder nach unten gedrückt werden kann. Um das Getriebe einen Gang höher zu schalten, muss der Fußschwenkhebel 2 entsprechend dem Pfeil 5 mit dem Fuß nach oben gezogen werden. Um einen Gang zurückzuschalten, muss der Fußschalthebel 2 entsprechend dem Pfeil 6 nach unten gedrückt werden.

Der Fußschalthebel 2 ist mittelbar über einen sogenannten Schaltassistenten 7 mit einer seitlich aus einem hier nicht näher dargestellten Getriebegehäuse herausstehenden Schaltwelle 8 eines Motorradgetriebes gekoppelt.

Der Schaltassistent 7 weist zwei schwenkbar um die Achse der Schaltwelle 8 angeordnete Schwenkelemente auf, nämlich ein durch ein Gehäuse des Schaltassistenten gebildetes Eingangselement 9 und ein ebenfalls um die Achse der Schaltwelle 8 schwenkbar angeordnetes Ausgangselement 10 auf. Das Eingangselement 9, das hier durch das Gehäuse des Schaltassistenten 7 gebildet ist, ist über eine Koppelstange 11 mit dem Fußschalthebel 2 gekoppelt. (Durch Verschwenken) Eine Schwenkbewegung des Fußschalthebels 2 wird somit in eine Schwenkbewegung des durch das Gehäuse gebildeten Eingangselements 9 um die Achse der Schaltwelle 8 umgesetzt.

Wie aus Figur 1 ersichtlich ist, ist das Eingangselement 9 über eine Federeinrichtung, die hier durch zwei schematisiert dargestellte Schraubenfedern 12a, 12b angedeutet ist, mit dem Ausgangselement 10 gekoppelt. Das Ausgangselement 10 ist hier ein mit der Schaltwelle 8 verbundener Schwenkarm.

Steht das Getriebe unter Last, d. h. wird ein signifikantes Drehmoment über das Getriebe übertragen, so kann nicht ohne weiteres geschaltet werden. Betätigt der Fahrer den Fußschalthebel 2 z. B. nach oben in Richtung des Pfeils 5, so führt dies zu einem Verschwenken des Eingangselements 9 um die Achse der Schaltwelle 8 im Uhrzeigersinn. Das Eingangselement 9 wird also im Uhrzeigersinn relativ zu dem Ausgangselement 10 verschwenkt. Die Schwenkbewegung des Eingangselements 9 wird erst dann in eine Schwenkbewegung des Ausgangselements 10 umgesetzt, wenn der Antriebsstrang bzw. das Getriebe entlastet wird, z. B. durch Gas wegnehmen. Hierauf wird jedoch später noch näher eingegangen.

Figur 2 zeigt ein kinematisch umgekehrtes Ausführungsbeispiel. Hier ist das Eingangselement 9 durch einen in dem Gehäuse des Schaltassistenten 7 angeordneten Schwenkhebel gebildet, der über die Koppelstange 11 mit dem Fußschalthebel 2 gekoppelt ist. Das Ausgangselement 10 ist hier durch das Gehäuse des Schaltassistenten gebildet. Das Gehäuse des Schaltassistenten ist dementsprechend mit der Schaltwelle 8 drehgekoppelt. Auch hier sind sowohl das Eingangselement 9 als auch das Ausgangselement 10 um die Achse der Schaltwelle 8 schwenkbar.

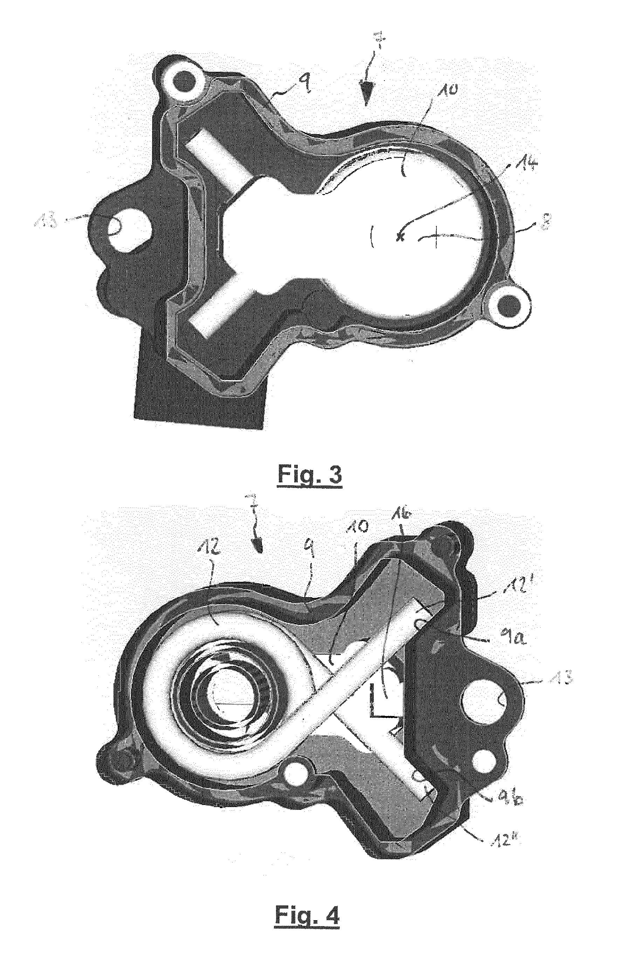

Die Figuren 3 - 5 zeigen ein konkretes Ausführungsbeispiel eines Schaltassistenten gemäß dem in Figur 1 gezeigten Grundprinzip, bei dem das Eingangselement 9 durch ein Gehäuse des Schaltassistenten gebildet ist und das Ausgangselement 10 durch einen Schwenkarm, welcher in dem Gehäuse des Schaltassistenten 7 angeordnet ist. Das das Eingangselement 9 bildende Gehäuse weist ein Gehäuseauge 13 auf, das über eine in den Figuren 3 bis 5 nicht dargestellte Koppelstange (entsprechend der Koppelstange 11, Figur 1) mit einem Fußschalthebel gekoppelt sein kann. Über eine derartige Koppelstange kann ein über den Fußschalthebel eingeleitetes Drehmoment auf das als Eingangselement fungierende Gehäuse des Schaltassistenten 7 übertragen werden. Ein Verschwenken des Fußschaltelements wird somit in eine Schwenkbewegung des als Eingangselement 9 fungierenden Gehäuses des Schaltassistenten 7 umgesetzt. Das Eingangselement 9 kann um eine Schwenkachse 14, welche identisch mit der Längsachse der Schaltwelle 8 ist, verschwenkt werden. Der als Ausgangselement 10 fungierende Schwenkarm ist mit der Schaltwelle 8 drehgekoppelt und kann ebenfalls um die Schwenkachse 14 verschwenkt werden. Insbesondere können das Eingangselement 9 und das Ausgangselement 10 relativ zueinander um die Schwenkachse 14 verschwenken. Das Eingangselement 9 und das Ausgangselement 10 können auch gemeinsam und gleichsinnig um die Schwenkachse 14 verschwenken, d. h. ohne dass sie relativ zueinander verschwenkt werden.

Wie am besten aus Figur 4 ersichtlich ist, ist das Eingangselement 9 über eine Schraubenfeder 12 elastisch mit dem Ausgangselement 10 schwenkgekoppelt. Die Schraubenfeder 12 weist zwei oder mehrere Schraubenwindungen auf. Die beiden freien Enden 12', 12" der Schraubenfeder liegen in der in Figur 4 gezeigten vorgegebenen Relativgrundstellung des Eingangselements 9 in Bezug auf das Ausgangselement 10 an zugeordneten Gehäuseflanken 9a, 9b des als Eingangselement fungierenden Gehäuses 9 des Schaltassistenten 7 an.

Möchte der Fahrer das Getriebe einen Gang höher oder einen Gang herunter schalten, so wird er den Fußschalthebel 2 (vgl. Figur 1) entsprechend dem Pfeil 5 nach oben ziehen oder entsprechend dem Pfeil 6 (vgl. Figur 1) nach unten drücken. Die entsprechende Schwenkbewegung des Fußschalthebels 2 wird über die Koppelstange 11 auf das Eingangselement 9 übertragen und zwar ohne dass zunächst das Ausgangselement 10 bzw. die damit drehgekoppelte Schaltwelle 8 verschwenkt wird. Die Verschwenkbewegung des Fußschalthebels 2 wird somit in eine Relativschwenkbewegung des Eingangselements 9 in Bezug auf das Ausgangselement 10 umgesetzt. Aufgrund der Relativschwenkbewegung kommt es zu einer (weiteren) Verspannung der Schraubenfeder 12. Anders ausgedrückt nimmt die potentielle Energie der Schraubenfeder 12 durch die Relativschwenkbewegung zu.

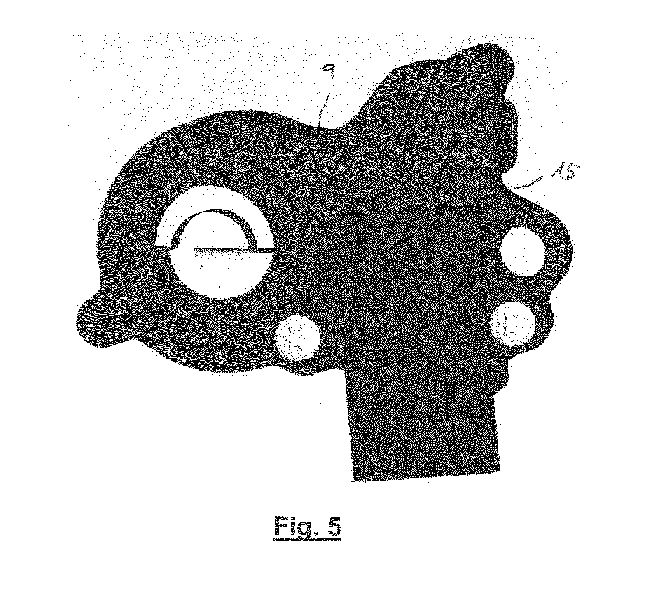

Das Verschwenken des Eingangselements 9 in Bezug auf das Ausgangselement wird mittels eines Hallsensors 15 (vgl. Figur 5), der seitlich an dem Gehäuse des Schaltassistenten 7 angeordnet ist, sensiert. Bei Überschreiten einer vorgegebenen Relativauslenkung des Eingangselements 9 in Bezug auf das Ausgangselement 10 erzeugt der Hallsensor 15 ein Schaltwunschsignal. Der Hallsensor 15 kann z. B. durch einen an dem Ausgangselement 14 angeordneten Magneten 16 und eine in dem Sensorgehäuse 15 untergebrachte Spulenanordnung (nicht dargestellt) gebildet sein.

Das Vorliegen eines entsprechenden Schaltwunschsignals wird von einer hier nicht näher dargestellten Motorsteuerung detektiert. Die Motorsteuerung modifiziert bei Vorliegen eines Schaltwunschsignals das Motor-Antriebsmoment kurzfristig so, dass der Antriebsstrang bzw. das Getriebe kurzzeitig im Wesentlichen lastfrei werden, was dann ein Schalten von einem Getriebegang in einen nächsthöheren oder nächstniedrigeren Getriebegang ermöglicht.

Sobald das Getriebe geschaltet hat, wird der Fahrer den Fußschalthebel 2 wieder loslassen, was dazu führt, dass die Schraubenfeder 12 das Eingangselement 9 und das Ausgangselement 10 in die in Figur 4 gezeigte Relativgrundstellung zurückverschwenkt.

Wie aus den Figuren 3 bis 5 ersichtlich ist, ist der Schaltassistent sehr einfach, kompakt und kostengünstig aufgebaut. Ein weiterer Vorteil ist darin zu sehen, dass er mit einer einzigen Schraubenfeder 12 auskommt und sowohl ein Hochschalten als auch ein Herunterschalten unterstützt.

## Patentansprüche

1. Schalteinrichtung (1), insbesondere für Motorräder, mit
- einem Schalthebel (2), insbesondere einem per Fuß betätigbaren Fußschalthebel,
- einer Schaltassistenzeinrichtung (7), die
- ein mit dem Schalthebel (2) gekoppeltes Eingangselement (9),
- ein mit einem Schalteingang (8) eines Getriebes gekoppeltes Ausgangselement (10) und
- eine Federeinrichtung (12) aufweist, welche eine Kraft- oder Drehmomentübertragung von dem Eingangselement (9) auf das Ausgangselement (10), und umgekehrt, ermöglicht,
**dadurch gekennzeichnet, dass** das Eingangselement (9) um eine erste Schwenkachse (14) und das Ausgangselement (10) um eine zweite Schwenkachse (14) schwenkbar ist.

2. Schalteinrichtung nach Anspruch 1, **dadurch gekennzeichnet, dass** das Eingangselement (9) relativ zu dem Ausgangselement (10) verschwenkbar ist, und umgekehrt.

3. Schalteinrichtung nach Anspruch 1 oder 2, **dadurch gekennzeichnet, dass** das Eingangselement (9) und das Ausgangselement (10) gemeinsam und gleichsinnig in Bezug auf ein Gehäuse des Getriebes verschwenkbar sind und zwar ohne dass sie relativ zueinander verschwenkt werden.

4. Schalteinrichtung nach einem der Ansprüche 1 bis 3, **dadurch gekennzeichnet, dass** die erste Schwenkachse koaxial zur und/oder identisch mit der zweiten Schwenkachse (14) ist.

5. Schalteinrichtung nach einem der Ansprüche 1 bis 4, **dadurch gekennzeichnet, dass** das Eingangselement (9) durch ein Gehäuse der Schaltassistenzeinrichtung (7) und das Ausgangselement (10) durch ein in dem Gehäuse angeordnetes Schwenkelement, insbesondere durch einen Schwenkarm gebildet ist, oder umgekehrt.

6. Schalteinrichtung nach einem der Ansprüche 1 bis 5, **dadurch gekennzeichnet, dass** sich das Eingangselement (9) und das Ausgangselement (10) in einer vorgegebenen Relativgrundstellung befinden, wenn der Schalthebel (2) unbetätigt ist.

7. Schalteinrichtung nach einem der Ansprüche 1 bis 6, **dadurch gekennzeichnet, dass** die in der Federeinrichtung (12) gespeicherte Federenergie in der vorgegebenen Relativgrundstellung minimal ist.

8. Schalteinrichtung nach einem der Ansprüche 1 bis 7, **dadurch gekennzeichnet, dass** die Federeinrichtung (12) genau eine Feder aufweist.

9. Schalteinrichtung nach einem der Ansprüche 1 bis 8, **dadurch gekennzeichnet, dass** die Federeinrichtung (12) eine Biegefeder aufweist.

10. Schaiteinrichtung nach Anspruch 9, **dadurch gekennzeichnet, dass** die Biegefeder eine Blattfeder oder eine Schraubenfeder (12) ist.

11. Schalteinrichtung nach einem der Ansprüche 1 bis 10, **dadurch gekennzeichnet, dass** die Federeinrichtung eine Schraubenfeder (12) mit mindestens einer Federwindung aufweist, wobei in Richtung einer Schraubachse der Schraubenfeder (12) betrachtet, die freien Enden (12', 12") einander kreuzen.

12. Schalteinrichtung nach einem der Ansprüche 6 bis 11, **dadurch gekennzeichnet, dass** eine Sensoreinrichtung (15, 16) vorgesehen ist, welche eine Relativbewegung des Eingangselements (9) in Bezug auf das Ausgangselement (10), oder umgekehrt, sensiert, und welche ab einer vorgegebenen Relativauslenkung aus der vorgegebenen Relativgrundstellung ein einen Schaltwunsch indizierendes Schaltwunschsignal erzeugt.

13. Schalteinrichtung nach Anspruch 12, **dadurch gekennzeichnet, dass** die Sensoreinrichtung (15, 16) einen Hallsensor aufweist.

14. Schalteinrichtung nach einem der Ansprüche 12 oder 13, **dadurch gekennzeichnet, dass** eine Elektronik vorgesehen ist, welche bei Vorliegen eines Schaltwunschsignals ein von einem Antriebsmotor erzeugtes Drehmoment so verändert, dass das von dem Getriebe übertragene Drehmoment unter einen vorgegebenen Wert absinkt, so dass ein Schalten von einem momentan eingelegten Getriebegang in einen anderen Getriebegang entsprechend einem über den Schalthebel vorgegebenen Drehmoment ermöglicht wird.

15. Schaiteinrichtung nach einem der Ansprüche 1 bis 14, **dadurch gekennzeichnet, dass** die Schaltassistenzeinrichtung (7) seitlich außen an einem Gehäuse des Getriebes angeordnet ist.

16. Schaiteinrichtung nach einem der Ansprüche 1 bis 15, **dadurch gekennzeichnet, dass** der Schalthebel (2) um eine Schalthebelschwenkachse (3) verschwenkbar ist und zwar in einer Hochschaltschwenkrichtung (5) und entgegengesetzt dazu in einer Rückschaltschwenkrichtung (6).

17. Verfahren zum Schalten eines Getriebes, bei dem über einen schwenkbar angeordneten Schalthebel (2) ein von einem Fahrer vorgegebenes Drehmoment auf ein Eingangselement (9) einer Schaltassistenzeinrichtung (7) und von dem Eingangselement (9) über eine Federeinrichtung (12) der Schaltassistenzeinrichtung (7) auf ein Ausgangselement (10) der Schaltassistenzeinrichtung (7) und von dem Ausgangselement (10) auf einen Schalteingang (8) des Getriebes übertragen wird, **dadurch gekennzeichnet, dass** das Eingangselement (9) während eines Schaltvorgangs relativ zu dem Ausgangselement (10) verschwenkt wird.

18. Verfahren nach Anspruch 17, **dadurch gekennzeichnet, dass** das Eingangselement (9) und das Ausgangselement (10) um eine gemeinsame Schwenkachse (8) relativ zueinander verschwenkt werden.
